# EUROPEAN PATENT APPLICATION

(11) **EP 4 585 428 A1**
(43) Date of publication of application: **16.07.2025**
(21) Application number: 25150385.0
(22) Date of filing: 07.01.2025
(51) Int. Cl.: B60C 1/00, C08L 15/00, C08K 9/06

(54) **RUBBER COMPOSITIONS AND ARTICLES THEREOF**

(30) Priority: 09.01.2024 US 202418408157
(71) Applicant: The Goodyear Tire & Rubber Company, Akron, OH 44316 (US)
(72) Inventor: ENGELDINGER, Eric, L-8508 Rédange/Attert (LU); WEYDERT, Marc, L-8064 Bertrange (LU)
(74) Representative: Kutsch, Bernd

(57) **Abstract**

Disclosed is an uncured elastomer composition that includes a partially saturated elastomer and a silanized or pre-silanized silica. The uncured compositions includes 40 phr to 200 phr of the silanized or pre-silanized silica and at least one partially saturated elastomer including repeat units. Greater than 15% to 30% of all repeat units of the partially saturated elastomer include a double bond. Also disclosed are vulcanized compositions including the uncured compositions that have been vulcanized and articles including tires and/or components of tires comprising the vulcanized compositions.

## Description

### BACKGROUND

The demand for improved tire performance has resulted in the development and evaluation of new materials that have desired properties such as good stiffness and rolling resistance. In tire elastomer compositions, improving rolling resistance usually comes at the cost of reducing the stiffness of the composition. Improving properties such as rolling resistance and tensile strength while maintaining a balance in tradeoffs is challenging. There is a need for elastomer compositions for tires that can provide good rolling resistance as well as good tensile strength, while at the same time maintaining desired stiffness of the material.

### SUMMARY OF THE INVENTION

The invention relates to an uncured elastomer composition in accordance with claim 1, to a vulcanized composition of claim 11 and to an article of claim 12.

Dependent claims refer to preferred embodiments of the invention.

The disclosure, in one aspect, relates to uncured compositions that include a partially saturated elastomer and silanized or pre-silanized silica. In some aspects, the uncured compositions include 40 phr to 200 phr of a silanized or pre-silanized silica and at least one partially saturated elastomer including repeat units, where greater than 15% to 30% of all repeat units of the partially saturated elastomer include a double bond. Also disclosed are vulcanized rubber compositions including the uncured compositions after vulcanization and articles including tires and/or components of tires made from or including the vulcanized rubber compositions.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, all optional and preferred features and modifications of the described embodiments are usable in all aspects of the disclosure taught herein. Furthermore, the individual features of the dependent claims, as well as all optional and preferred features and modifications of the described embodiments are combinable and interchangeable with one another.

### DETAILED DESCRIPTION OF PREFERRED EMBODIMENTS

Prior to describing the various aspects of the present disclosure, the following definitions are provided and should be used unless otherwise indicated. Additional terms may be defined elsewhere in the present disclosure.

### Definitions

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, the terms "optional" or "optionally" means that the subsequently described event or circumstance can or cannot occur, and that the description includes instances where said event or circumstance occurs and instances where it does not.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers elastomers is in accordance with claimed phr ranges and the amount of all rubbers/elastomers in the composition results in total in 100 parts of rubber.

The terms "rubber" and "elastomer" may be used herein interchangeably, unless indicated otherwise.

As used herein, the "glass transition temperature" or "T_{g}", of an elastomer or rubber represents the glass transition temperature(s) of the respective elastomer or rubber in its uncured state or, in the case of an elastomer composition, in some aspects, T_{g} can be measured in a cured state.

T_{g} values referred to herein are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

The CTAB specific surface area is the external surface area determined in accordance with Standard AFNOR-NFT-45007 of November 1987.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

As used herein, the term "repeat unit" as referenced in the partially saturated elastomers described herein are derived from monomers used to produce the partially saturated elastomers. For example, polybutadiene has the repeat unit as provided below.

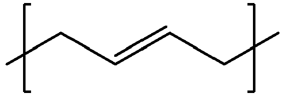

In certain aspects, when the partially saturated elastomer is the polymerization product of two different monomers (e.g., A and B), the repeat unit can be represented by -A-B-.

Unless otherwise specified, pressures referred to herein are based on atmospheric pressure (i.e. one atmosphere).

### Rubber Compositions

It has been discovered that the combination of a partially saturated elastomer having an increased number of double bonds with a silanized or pre-silanized silica results in an unexpected improvement in stiffness and hysteresis. Additionally, the use of the partially saturated elastomers described herein also improve tensile strength.

The uncured compositions, such as uncured rubber compositions, described herein include a partially saturated elastomer and silanized or pre-silanized silica. In some aspects, the uncured compositions include 40 phr to 200 phr of a silanized or pre-silanized silica and at least one partially saturated elastomer including repeat units, where greater than 15% to 30% of all repeat units of the partially saturated elastomer include a double bond. Also disclosed herein are vulcanized rubber compositions including the uncured compositions that have been vulcanized and articles including tires and/or components of tires made from or including the vulcanized rubber compositions. The vulcanized or cured compositions have good rolling resistance and tensile strength with little to no decrease in stiffness compared to cured compositions that do not contain silanized or pre-silanized silica.

In some aspects, the partially saturated elastomer includes repeat units where greater than 15% to 30% of all repeat units include a double bond. In other aspects, the amount of repeat units that include a double bond can be 16%, 17%, 18%, 19%, 20%, 21%, 22%, 23%, 24%, 25%, 26%, 27%, 28%, 29%, or 30%, where any value can be a lower and upper endpoint of a range (e.g., 16% to 25%). When counting double bonds, the double bonds in an aromatic structure or group, such as those present in a styrene repeat unit, are not included in the count. However, a styrene unit is still counted as a repeat unit for the determination of the total number of repeat units in an elastomer.

In one aspect, the partially saturated elastomer can comprise repeat units formed by residues of monomers selected from one or more of ethylene, propylene, butadiene, isoprene, styrene, and any combination thereof. In further aspects, the partially saturated elastomer is a hydrogenated styrene butadiene rubber, in some aspects a hydrogenated solution-polymerized styrene butadiene rubber (SSBR). The hydrogenated styrene butadiene rubber can have a styrene content from 5 wt% to 40 wt%, or 5 wt%, 10 wt%, 15 wt%, 20 wt%, 25 wt%, 30 wt%, 35 wt%, or 40 wt%, where any value can be a lower and upper endpoint of a range (e.g., 20 wt% to 40 wt%), and a butadiene content from 60 wt% to 95 wt%, or 60 wt%, 65 wt%, 70 wt%, 75 wt%, 80 wt%, 85 wt%, 90 wt%, or 95 wt%, where any value can be a lower and upper endpoint of a range (e.g., 75 wt% to 90 wt%). In some aspects, an SSBR can be referred to as a partially hydrogenated SSBR (HSBR) when greater than 15% to 30% of all repeat units of the SSBR include a double bond.

In other aspects, HSBR can be characterized as having 16%, 17%, 18%, 19%, 20%, 21%, 22%, 23%, 24%, 25%, 26%, 27%, 28%, 29%, or 30%, where any value can be a lower and upper endpoint of a range (e.g., 18% to 23%), of all repeat units include a double bond. HSBR can also be characterized by having a weight average molecular weight (M_{w}) from 100 kg/mol to 4,000 kg/mol, or 100 kg/mol, 200 kg/mol, 300 kg/mol, 400 kg/mol, 500 kg/mol, 600 kg/mol, 700 kg/mol, 800 kg/mol, 900 kg/mol, 1,000 kg/mol, 1,100 kg/mol, 1,200 kg/mol, 1,300 kg/mol, 1,400 kg/mol, 1,500 kg/mol, 2,000 kg/mol, 3,000 kg/mol, or 4,000 kg/mol where any value can be a lower and upper endpoint of a range (e.g., 600 kg/mol to 900 kg/mol). In a further aspect, HSBR can be characterized by having a polydispersity index (M_{w}/Mₙ, Mₙ being the number average molecular weight) of 1.05 to 2.0 or 1.2, 1.4, 1.6, 1.8, or 2.0, where any value can be a lower and upper endpoint of a range (e.g., 1.4 to 1.8).

Molecular weight parameters are determined via gel permeation chromatography according to ASTM 5296-11 using polystyrene calibration standards, or an equivalent.

In other aspects, HSBR can have a glass transition temperature from -70 °C to -20 °C, or -70 °C, -60 °C, -50 °C, -40 °C, -30 °C, or -20 °C, where any value can be a lower and upper endpoint of a range (e.g., -60 °C to -40 °C).

A partially saturated elastomer, in some aspects HSBR, can be obtained by hydrogenating an elastomer. A method for hydrogenating an elastomer can be performed by any methods known in the art. In one aspect, hydrogenation is performed by blowing aqueous hydrogen into an elastomer or polymer solution in the presence of a catalyst, such as a heterogeneous catalyst, a homogeneous catalyst, a catalyst using metallocene, such as titanocene, or any combination thereof. Examples of heterogenous catalysts include a catalyst containing a noble metal supported on a porous inorganic substance. Examples of homogenous catalysts include a catalyst obtained by reacting a solubilized salt of nickel, cobalt, or the like with organic aluminum or the like. The extent of hydrogenation in the resulting elastomer can be controlled by varying factors such as the amount of hydrogen added, the pressure of the hydrogen, the reaction time, the reaction temperature, the amount of catalyst added, the polymer solution viscosity, or any combination thereof. In some aspects, the hydrogenation reaction is carried out at a temperature of from 60 °C to 105 °C or 60 °C, 70 °C, 80 °C, 90 °C, 100 °C, or 105 °C, where any value can be a lower and upper endpoint of a range (e.g., 70 °C to 100 °C). In some aspects, the hydrogenation reaction is carried out as a batch process, a continuous process, or a combination thereof. Additional details regarding the production of partially saturated elastomers are described in US 2023/0138073 A1 and EP 4 261 234 A1.

In other aspects, the compositions described herein can comprise from 40 phr to 200 phr of a silanized or pre-silanized silica. In other aspects, the composition can comprise from 80 phr to 130 phr of a silanized or pre-silanized silica or 40 phr, 60 phr, 80 phr, 100 phr, 130 phr, 160 phr, 190 phr, or 200 phr, where any value can be a lower and upper endpoint of a range (e.g., 100 phr to 160 phr). In some aspects, the silanized or pre-silanized silica has a BET surface area from 70 g/m² to 200 g/m² or 70 g/m², 100 g/m², 130 g/m², 160 g/m², or 200 g/m², where any value can be a lower and upper endpoint of a range (e.g., 130 g/m² to 200 g/m²). In some aspects, the silanized or pre-silanized silica has a CTAB absorption surface area from 120 g/m² to 220 g/m² or 120 g/m², 140 g/m², 160 g/m², 180 g/m², 200 g/m², or 220 g/m², where any value can be a lower and upper endpoint of a range (e.g., 140 g/m², to 200 g/m2).

In one aspect, the silanized or pre-silanized silica can include silica with an alkylsilane, an alkoxysilane, an organoalkoxysilyl polysulfide, or an organomercaptoalkoxysilane bonded to the silica. In other aspects, the silanized or pre-silanized silica includes a silica with a sulfur-containing silane bonded to the silica. In one aspect, the sulfur-containing silane can include an alkoxyorganomercaptosilane or a bis(3-triethoxysilylpropyl)polysulfide, with an average of 2 to 5 connecting sulfur atoms in its polysulfidic bridge. Examples of silanized or pre-silanized silicas suitable for use in the compositions described herein include Ciptane^{®} 255 LD and Ciptane^{®} LP (PPG Industries); silicas that have been treated or pre-treated with a mercaptosilane; Coupsil^{®} 8113 (Degussa); Coupsil^{®} 6508; and Agilon^{®} 400, 454, and 458 silica from PPG Industries.

In some aspects, the silanized or pre-silanized silica is treated with a silica dispersing aid. Such silica dispersing aids may include glycols, such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include, but are not limited to, the sorbitan oleates (such as sorbitan monooleate, dioleate, trioleate, and sesquioleate) as well as sorbitan esters of laurate, palmitate, and stearate fatty acids. Exemplary polyoxyethylene derivatives of fatty acid esters of hydrogenated and non-hydrogenated C5 and C6 sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups. The silica dispersing aids can be present in amounts ranging from 0.1 wt% to 25 wt% based on the weight of the silica.

In other aspects, the silanized or pre-silanized silica is hydrophobated or pre-hydrophobated by treating silica in an aqueous colloidal form thereof with both an organomercaptosilane and an alkylsilane in a weight ratio of from 10/90 to 90/10 (organomercaptosilane to alkylsilane). In some aspects, alkylsilane is represented by the general formula (I):

Xₙ-Si-R¹₄₋ₙ (I),

wherein R is an alkyl radical with 1 to 18 carbon atoms or from 1 to 8 carbon atoms (e.g., methyl, ethyl, butyl, etc.), n is from 1 to 3, and X is a radical selected from the halogens and alkoxy radicals. In some aspects, X is chlorine or bromine. In other aspects, X is an alkoxy radical such as (R²O)-, wherein R² is an alkyl radical having from 1 to 3 carbon atoms. In some aspects, organomercaptosilane is represented by of the general formula (II):

(X)ₙ(R³O)₃₋ₙ-Si-R⁴-SH (II),

wherein X is a radical selected from the halogens and alkyl radicals having from 1 to 16 carbon atoms, R³ is an alkyl radical with 1 to 16 carbon atom or 1 to 4 carbon atoms, R⁴ is an alkylene radical with 1 to 16 carbon atoms or 1 to 4 carbon atoms (e.g., -(CH₂)ₘ- where m is 1 to 16), and n is from 0 to 3. In some aspects, X is chlorine or bromine. In other aspects, X is an alkyl radical selected from methyl, ethyl, n-propyl, and n-butyl radicals. In other aspects, R⁴ is a propylene radical. In some aspects, n is 0.

Representative alkylsilanes of formula (I) are trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane. Representative organomercaptosilanes of Formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

The uncured rubber composition can further include 0.4 phr to 15.0 phr of a vulcanizing agent, or 0.4 phr, 3.0 phr, 6.0 phr, 9.0 phr, 12.0 phr, or 15.0 phr, where any value can be a lower and upper endpoint of a range (e.g., 9.0 phr to 12.0 phr). In some aspects, the vulcanizing agent includes elemental sulfur, a sulfur-containing silane, or a combination thereof. Additionally, the uncured rubber composition can further include a vulcanizing accelerator. Vulcanizing accelerators can be preferably but not necessarily used to control the time and/or temperature required for vulcanization and to improve the properties of a vulcanized composition. The amount of vulcanizing accelerator in the composition can be in the amount of 0.3 phr to 4.0 phr, or 0.3 phr, 1.0 phr, 2.0 phr, 3.0 phr, or 4.0 phr, where any value can be a lower and upper endpoint of a range (e.g., 1.0 phr to 2.0 phr).

In some aspects, the vulcanizing accelerator includes a dithiocarbamate accelerator, a thiuram accelerator, a diphenylguanidine accelerator, a benzothiazole sulfenamide accelerator, or a combination thereof. The potential vulcanizing accelerator compounds can include derivatives, e.g., a benzothiazole sulfenamide accelerator includes benzothiazole sulfenamide and can also include derivatives of benzothiazole sulfenamide. In other aspects, the vulcanizing accelerator includes amines, disulfides, guanidines, thioureas, thiazoles, thiurams, sulfenamides, dithiocarbamates and xanthates. In another aspect, the vulcanizing accelerator includes combinations of a primary and a secondary accelerator, where the secondary accelerator is used in smaller amounts, such as from 0.05 phr to 3.00 phr. In some aspects, the secondary accelerator is selected from a guanidine, a dithiocarbamate, or a thiuram. In addition, delayed action accelerators can be used which are not affected by normal processing temperatures but produce a satisfactory cure at ordinary vulcanization temperatures.

The uncured rubber composition can comprise additional components, such as an oil. In some aspects, the oil is a processing oil. The processing oil can be included in the composition as an extending oil typically used to extend elastomers. The processing oil can also be included in the elastomer composition by addition of the oil directly during rubber compounding. The processing oil used can include both an extending oil present in the elastomers and a process oil added during compounding. Suitable processing oils include, but are not limited to, various oils as are known in the art, including aromatic, paraffinic, naphthenic, vegetable oils, and low PCA oils, such as MES, TDAE, SRAE, and heavy naphthenic oils. Suitable low PCA oils may include those having a polycyclic aromatic content of less than 3% by weight as determined by the IP346 method. Procedures for the IP346 method can be found in Standard Test Methods for Analysis and Testing of Petroleum and Related Products and British Standard 2000 Parts, 2003, 62nd edition, published by the Institute of Petroleum, United Kingdom. Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils can be available as the oil alone or along with an elastomer in the form of an extended elastomer. Suitable vegetable oils include, for example, soybean oil, sunflower oil, and canola oil which are in the form of esters containing a certain degree of unsaturation.

Described herein are vulcanized rubber compositions, where any of the uncured rubber compositions described herein have been vulcanized. In some aspects, the vulcanized rubber compositions have improved tensile strength compared to a cured composition that does not include a silanized or pre-silanized silica. In further aspects, the tensile strength of the vulcanized compositions disclosed herein have a tensile strength that is from 5% to 20% greater than a cured composition that does not include a silanized or pre-silanized silica (as determined by ASTM D412), or 5%, 10%, 15%, 20%, 25%, or 30%, where any value can be a lower and upper endpoint of a range (e.g., 10% to 15%).

In other aspects, the vulcanized rubber compositions can show little to no reduction in stiffness, and in some aspects an increase in stiffness, compared to a cured composition that does not include a silanized or pre-silanized silica. In further aspects, the vulcanized compositions disclosed herein have a stiffness G' that is within 10%, 15%, or 5% of a cured composition that does not include a silanized or pre-silanized silica, based on ASTM D5289 and where stiffness G' is measured at a strain at 1%, 100 °C, and a frequency of 1 Hz. The vulcanized compositions can also have a tangent delta that is 10% to 40% lower that the tangent delta of a cured composition that does not include a silanized or pre-silanized silica or 10%, 15%, 20%, 25%, 30%, 35%, or 40%, where any value can be a lower and upper endpoint of a range (e.g., 10% to 35%) based on DIN 53513 and where tangent delta is measured at 6%, 30 °C, and a frequency of 7.8 Hz.

### Preparation and Applications of Rubber Compositions

The compositions disclosed herein can be compounded by methods generally known in the rubber compounding art, such as mixing the partially saturated elastomer and silanized or pre-silanized silica with various vulcanizable constituent rubbers with various commonly used additive materials such as sulfur donors; curing aids, such as activators and retarders; processing additives, such as oils, resins (including tackifying resins), and plasticizers; fillers; pigments; fatty acids; zinc oxide; waxes; antioxidants; antiozonants; and peptizing agents. Zinc oxide can be included in amounts of 1 phr to 5 phr. Depending on the intended use of the vulcanizable and vulcanized material (rubbers), the additives mentioned above are selected and commonly used in conventional amounts. In some aspects, tackifier resins are included in amounts of 0.5 phr to 10 phr or 1 phr to 5 phr. In some aspects, processing additives are included in amounts of 1 phr to 50 phr. In some aspects, antioxidants are included in amounts of 1 phr to 5 phr. Representative antioxidants include, but are not limited to, diphenyl-p-phenylenediamine and others, such as those disclosed in The Vanderbilt Rubber Handbook (1978), Pages 344 through 346. In some aspects, antiozonants are included in amounts of 1 phr to 5 phr. Representative antiozonants include, but are not limited to, N-phenyl-N'-(1,3-dimethylbutyl)-p-phenylenediamine (6PPD) and N,N'-dixylene-p-phenylenediamine (DTPD). In some aspects, fatty acids are included in amounts of 0.5 phr to 3 phr. Examples of fatty acids used includes stearic acid. In some aspects, waxes are included in amounts of 1 phr to 5 phr. Microcrystalline waxes can be used. In some aspects, peptizers are included in amounts of 0.1 phr to 1 phr. Typical peptizers include, for example, pentachlorothiophenol and dibenzamidodiphenyl disulfide.

The compositions disclosed herein can be mixed by methods known in the rubber mixing art. For example, the ingredients may be typically mixed in at least two stages, namely, at least one nonproductive stage followed by a productive mix stage. In some aspects, the mixing of the uncured composition comprises only a single nonproductive stage. The final curatives including vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the elastomer composition may be subjected to a thermomechanical mixing step. The thermomechanical mixing step generally comprises a mechanical working in a mixer or extruder for a period of time, for example suitable to produce a rubber temperature which is within the range of 140 °C to 190 °C. The appropriate duration of the thermomechanical working varies as a function of the operating conditions, and the volume and nature of the components. For example, the thermomechanical working may be from 1 to 20 minutes.

This disclosure also provides for articles that incorporate any of the vulcanized rubber compositions disclosed herein. In some aspects, the article comprises a tire, such as a pneumatic tire, or a component of a tire. The tire can be a race tire, passenger tire, aircraft tire, agricultural, earthmover, off-the-road, truck tire, or the like. In one aspect, the tire is a passenger or truck tire. The tire can also be a radial or bias. The component of the tire can be a tread, base, sidewall, apex, chafer, sidewall insert, wirecoat, innerliner, or any combination thereof. In another aspect, the component of the tire including the composition is a tread, base, sidewall, or any combination thereof. Vulcanization of the disclosed tires is generally carried out at conventional temperatures ranging from 100 °C to 200 °C or from 110 °C to 180 °C. Such tires can be built, shaped, molded and cured by various methods which are known and will be readily apparent to those having skill in such art.

Now having described the aspects of the present disclosure, in general, the following Examples describe some additional aspects of the present disclosure. While aspects of the present disclosure are described in connection with the following examples and the corresponding text and figures, there is no intent to limit aspects of the present disclosure to this description.

### ASPECTS

The present disclosure can be described in accordance with the following numbered Aspects, which should not be confused with the claims.

Aspect 1. An uncured composition comprising: at least one partially saturated elastomer comprising repeat units, wherein greater than 15% to 30% of all repeat units of the partially saturated elastomer comprise a double bond, and 40 phr to 200 phr of a silanized or pre-silanized silica.

Aspect 2. The composition of aspect 1, wherein 16% to 25% of all repeat units of the partially saturated elastomer comprise a double bond.

Aspect 3. The composition of aspect 1 or 2, wherein the partially saturated elastomer comprises repeat units formed by residues of monomers selected from one or more of ethylene, propylene, butadiene, isoprene, styrene, and any combination thereof.

Aspect 4. The composition of aspect 1 or 2, wherein the partially saturated elastomer is a partially hydrogenated styrene butadiene rubber.

Aspect 5. The composition of aspect 4, wherein the partially hydrogenated styrene butadiene rubber has from 16% to 25% repeat units comprising a double bond.

Aspect 6. The composition of aspects 4 or 5, wherein the partially hydrogenated styrene butadiene rubber has a styrene content from 5 wt% to 40 wt% of the partially hydrogenated styrene butadiene rubber and a butadiene content from 60 wt% to 95 wt% of the partially hydrogenated styrene butadiene rubber.

Aspect 7. The composition of any one of aspects 4-6, wherein the partially hydrogenated styrene butadiene rubber has a glass transition temperature from -70 °C to -20 °C.

Aspect 8. The composition of any one of aspects 4-7, wherein the hydrogenated styrene butadiene rubber has a weight average molecular weight from 100 kg/mol to 4000 kg/mol.

Aspect 9. The composition of any one of aspects 4-7, wherein the partially hydrogenated styrene butadiene rubber has an average molecular weight from 100 kg/mol to 1500 kg/mol.

Aspect 10. The composition of any one of aspects 1-9, wherein the composition comprises from 80 phr to 130 phr of the silanized or pre-silanized silica.

Aspect 11. The composition of any one of aspects 1-10, wherein the silanized or pre-silanized silica has a BET surface area from 70 g/m2 to 200 g/m².

Aspect 12. The composition of any one of aspects 1-11, wherein the silanized or pre-silanized silica has a CTAB adsorption surface area from 120 g/m2 to 220 g/m².

Aspect 13. The composition of any one of aspects 1-12, wherein the silanized or pre-silanized silica comprises silica with an alkylsilane, an alkoxysilane, an organoalkoxysilyl polysulfide, or an organomercaptoalkoxysilane bonded to the silica.

Aspect 14. The composition of any one of aspects 1-12, wherein the silanized or pre-silanized silica comprises a silica with a sulfur-containing silane bonded to the silica.

Aspect 15. The composition of aspect 14, wherein the sulfur-containing silane comprises a bis(3-triethoxysilylpropyl)polysulfide, comprising an average of 2 to 5 connecting sulfur atoms in its polysulfidic bridge, or an alkoxyorganomercaptosilane.

Aspect 16. The composition of any one of aspects 1-15, wherein the composition further comprises a vulcanizing agent in the amount of 0.4 phr to 15.0 phr.

Aspect 17. The composition of aspect 16, wherein the vulcanizing agent comprises elemental sulfur, a sulfur containing silane, or a combination thereof.

Aspect 18. The composition of any one of aspects 1-17, wherein the composition further comprises a vulcanizing accelerator in the amount of 0.3 phr to 4.0 phr.

Aspect 19. The composition of aspect 18, wherein the vulcanizing accelerator comprises a dithiocarbamate accelerator, a thiuram accelerator, a diphenylguanidine accelerator, a benzothiazole sulfenamide accelerator, or a combination thereof.

Aspect 20. A vulcanized rubber composition comprising the uncured composition of any one of aspects 1-19 that has been vulcanized.

Aspect 21. The composition of aspect 20, wherein the composition has a tensile strength that is from 5% to 20% greater than a cured composition that does not include silanized or pre-silanized silica as determined by ASTM D412.

Aspect 22. The composition of aspect 20 or 21, wherein the composition has a stiffness G' at a strain at 1%, 100 °C, and a frequency of 1 Hz based on ASTM D5289 that is within 10% of a cured composition that does not include silanized or pre-silanized silica.

Aspect 23. The composition of any one of aspects 20-22, wherein the composition has a tangent delta at 6%, 30 °C, and a frequency of 7.8 Hz based on DIN 53513 that is 10% to 40% lower than the tangent delta of a cured composition that does not include silanized or pre-silanized silica.

Aspect 24. An article comprising the vulcanized rubber composition of any one of aspects 20-23.

Aspect 25. The article of aspect 24, wherein the article comprises a tire or a component of a tire.

Aspect 26. The article of aspect 25, wherein the component of the tire comprises a tread, base, sidewall, apex, chafer, sidewall insert, wirecoat, innerliner, or any combination thereof.

Aspect 27. The article of aspect 25, wherein the component of the tire comprises a tread, base, sidewall, or any combination thereof.

### EXAMPLES

Unless indicated otherwise, parts are parts by weight, temperature is in °C or is at ambient temperature, and pressure is at or near atmospheric.

### Example 1: Rubber Compositions

Two elastomer compositions comprising a solution polymerized styrene butadiene rubber (SSBR)-based matrix are provided in Table 1. Most of the ingredients of the two compositions are the same. The most notable difference is that SSBR 2 contains a silanized or a pre-silanized silica whereas SSBR 1 contains a comparable amount of a conventional silica, i.e., a non-silanized or non-pre-silanized silica.

The rheological properties of the SSBR 1 and SSBR 2 compositions are presented in Table 2. There is no change in tensile strength between the two compositions. The Tangent Delta value is reduced by 14% in the composition containing the silanized or pre-silanized silica, an improvement compared to the composition containing the conventional silica. Since Tangent Delta can be considered a hysteresis indicator, this reduction also indicates that there would be a reduced rolling resistance in a tire comprising the vulcanized SSBR 2 composition compared to a tire comprising the vulcanized SSBR 1 composition. Unfortunately, the stiffness of the SSBR 2 composition is much less than that of the SSBR 1 composition, with G' being reduced by 34% in SSBR 2 compared to SSBR 1. The use of silanized or pre-silanized silica in an elastomer composition introduces this tradeoff (improved hysteresis for lower low-strain stiffness) due to improved silica dispersion. Although the reduced hysteresis is a positive result from the introduction of silanized or pre-silanized silica, the large decrease in stiffness could be problematic for many performance-oriented tire applications.

**Table 1: SSBR Rubber Compositions**

| | Amounts in phr | |
|---|---|---|
| Ingredient | SSBR 1 | SSBR 2 |
| SSBR¹ | 80 | 80 |
| PBD² | 20 | 20 |
| Plasticizing resin³ | 7 | 7 |
| Waxes | 1.5 | 1.5 |
| Oil⁴ | 10 | 5 |
| Processing aids⁵ | 3 | 3 |
| Stearic Acid | 3 | 3 |
| Silicas | 80 | 0 |
| Pre-silanized silica⁷ | 0 | 90 |
| Silane 1⁸ | 7 | 0 |
| Zinc Oxide | 2.5 | 2.5 |
| Sulfur | 1.3 | 1.3 |
| Antidegradants⁹ | 3 | 3 |
| DPG¹⁰ | 2.9 | 0 |
| CBS¹¹ | 2.3 | 2.3 |
| Silane 2 on carbon black carrier12 | 2 | 2 |

| | | |
|---|---|---|
| ¹ Solution polymerized styrene butadiene rubber as SLR4602 from Trinseo ² Polybutadiene rubber as Budene^{™} 1223 from Goodyear ³ Polyterpene resin as Sylvatraxx 4150 from Kraton Chemical ⁴ TDAE oil ⁵ including glycerine monoesters of stearic acid and zinc soaps of fatty acids ⁶ Precipitated silica as Zeosil^{™} Premium 200MP from Solvay ⁷ Pre-silanized, precipitated silica as Agilon^{™} 400 from PPG Industries ⁸ Bis-triethoxysilylpropyl disulfide as SI266^{™} from Evonik ⁹ based on phenylenediamines ¹⁰ Diphenylguanidine (accelerator) ¹¹ N-cyclohexyl-2-benzothiazolesulfenamide (accelerator) ¹² 50% bis-triethoxysilylpropyl tetrasulfide on 50% N330 carbon black carrier, as X50S from Evonik | | |

**Table 2: Rheological Properties**

| Property | SSBR 1 | SSBR 2 |
|---|---|---|
| G'(1%), 1 Hz [MPa] ^{a} | 2.24 | 1.47 |
| Tangent Delta (6%), 30°C ^{b} | 0.22 | 0.19 |
| Tensile Strength [MPa] ^{c} | 21.2 | 21.2 |

| | | |
|---|---|---|
| ^{a} G' has been obtained with an RPA 2000^{™} Rubber Process Analyzer of the company Alpha Technologies, based on ASTM D5289, at a strain of 1%, 100°C and a frequency of 1 Hz ^{b} Tangent Delta has been obtained by a Metravib^{™} instrument at 6% strain and 7.8 Hz based on DIN 53513, or equivalent, at a temperature of 30°C ^{c} Tensile strength has been determined by an S2 dumbell test based on ASTM D412 or equivalent, tensile strength is stress at break | | |

Two elastomer compositions comprising a partially hydrogenated SSBR (HSBR)-based matrix (approximately 77% hydrogenated) are provided in Table 3. Most of the ingredients of the two compositions are the same. The most notable difference is that HSBR 2 contains a silanized or pre-silanized silica whereas HSBR 1 contains a comparable amount of a conventional silica, i.e., a non-silanized or non-pre-silanized silica.

The rheological properties of the HSBR 1 and HSBR 2 compositions are presented in Table 4. Similar to SSBR 1 and 2, the Tangent Delta value is reduced in the composition containing the silanized or pre-silanized silica compared to the composition containing the conventional silica. However, in the HSBR compositions, the reduction in Tangent Delta is more significant (about 29%) when using silanized or pre-silanized silica. Also, the stiffness of the silanized or pre-silanized silica composition, HSBR 2, is much closer to that of HSBR 1, with G' being reduced by less than 10%, compared to the change in stiffness going from SSBR 1 to SSBR 2. Surprisingly, the HSBR 2 composition also shows an increase in tensile strength compared to HSBR 1. Improving tensile strength is difficult to achieve while also improving hysteresis properties. HSBR 2 has good stiffness, good rolling resistance indicators, and good tensile strength.

**Table 3: Exemplary Rubber Compositions**

| | Amounts in phr | |
|---|---|---|
| Ingredient | HSBR 1 | HSBR 2 |
| Pre-Silanized Silica¹ | 0 | 90 |
| Silica² | 80 | 0 |
| TDAE Oil | 10 | 5 |
| Waxes | 1.5 | 1.5 |
| Stearic Acid | 3 | 3 |
| HSBR³ | 100 | 100 |
| Silane⁴ | 8 | 0 |
| Antidegradants⁵ | 3 | 3 |
| Zinc oxide | 2.5 | 2.5 |
| Sulfur | 1.1 | 1.1 |
| Primary accelerators | 2.5 | 2.5 |
| Secondary accelerator⁷ | 0.2 | 0.2 |
| DPG⁸ | 2.9 | 0 |

| | | |
|---|---|---|
| ¹ Pre-silanized, precipitated silica as Agilon^{™} 400 from PPG Industries ² Precipitated silica as Zeosil^{™} Premium 200MP from Solvay ³ Partially hydrogenated SSBR (77% ± 3% butadiene hydrogenation) ⁴ Bis-triethoxysilylpropyl disulfide as SI266^{™} from Evonik ⁵ Phenylenediamine derivatives ⁶ N-cyclohexyl-2-benzothiazolesulfenamide - CBS ⁷ 2-mercaptobenzothiazole - MBT ⁸ Diphenylguanidine | | |

**Table 4: Rheological Properties**

| Property | HSBR 1 | HSBR 2 |
|---|---|---|
| G'(1%), 1 Hz [MPa] ^{a} | 2.33 | 2.16 |
| Tangent Delta (6%), 30°C ^{b} | 0.21 | 0.15 |
| Tensile Strength [MPa] ^{c} | 17.8 | 19.9 |

| | | |
|---|---|---|
| ^{a} G' has been obtained with an RPA 2000^{™} Rubber Process Analyzer of the company Alpha Technologies, based on ASTM D5289, at a strain of 1%, 100°C and a frequency of 1 Hz ^{b} Tangent Delta has been obtained by a Metravib^{™} instrument at 6% strain and 7.8 Hz based on DIN 53513, or equivalent, at a temperature of 30°C ^{c} Tensile strength has been determined by an S2 dumbbell sample test based on ASTM D412 or equivalent, tensile strength is stress at break | | |

## Claims

1. An uncured elastomer composition comprising at least one partially saturated elastomer comprising repeat units, wherein greater than 15% to 30% of all repeat units of the partially saturated elastomer comprise a double bond, and 40 phr to 200 phr of a silanized or pre-silanized silica.

2. The composition of claim 1, wherein 16% to 25% of all repeat units of the partially saturated elastomer comprise a double bond.

3. The composition of claim 1 or 2, wherein the partially saturated elastomer comprises repeat units formed by residues of monomers selected from one or more of ethylene, propylene, butadiene, isoprene, styrene, and any combination thereof.

4. The composition of at least one of the previous claims, wherein the partially saturated elastomer is a partially hydrogenated styrene butadiene rubber, and, optionally, wherein the partially hydrogenated styrene butadiene rubber has from 15% to 25% repeat units comprising a double bond.

5. The composition of claim 4, wherein the partially hydrogenated styrene butadiene rubber has a styrene content from 5 wt% to 40 wt% of the partially hydrogenated styrene butadiene rubber and a butadiene content from 60 wt% to 95 wt% of the partially hydrogenated styrene butadiene rubber.

6. The composition of claim 4 or 5, wherein the partially hydrogenated styrene butadiene rubber has a glass transition temperature from -70°C to -20°C; and/or wherein the partially hydrogenated styrene butadiene rubber has a weight average molecular weight from 100 kg/mol to 1500 kg/mol.

7. The composition of at least one of the previous claims, wherein the composition comprises from 80 phr to 130 phr of the silanized or pre-silanized silica.

8. The composition of at least one of the previous claims, wherein the silanized or pre-silanized silica has a BET surface area from 70 g/m² to 200 g/m² and/or a CTAB adsorption surface area from 120 g/m² to 220 g/m².

9. The composition of at least one of the previous claims, wherein the silanized or pre-silanized silica comprises silica with an alkylsilane, an alkoxysilane, an organoalkoxysilyl polysulfide, or an organomercaptoalkoxysilane bonded to the silica.

10. The composition of at least one of the previous claims, wherein the silanized or pre-silanized silica comprises a silica with a sulfur-containing silane bonded to the silica, the sulfur-containing silane preferably comprising a bis(3-triethoxysilylpropyl)polysulfide comprising an average of 2 to 5 connecting sulfur atoms in its polysulfidic bridge or preferably comprising an alkoxyorganomercaptosilane.

11. The composition of at least one of the previous claims, wherein the composition further comprises a vulcanizing agent in the amount of 0.4 phr to 15.0 phr and/or wherein the composition further comprises a vulcanizing accelerator in the amount of 0.3 phr to 4.0 phr.

12. A vulcanized composition comprising the uncured composition of at least one of the claims 1 to 11 that has been vulcanized.

13. An article comprising the vulcanized composition of claim 12.

14. The article of claim 13, wherein the article comprises a tire or a component of a tire.

15. The article of claim 14, wherein the component of the tire comprises a tread, a tread base layer, a sidewall, or any combination thereof.
